# EUROPEAN PATENT APPLICATION

(11) **EP 2 260 917 A1**
(43) Date of publication of application: **15.12.2010**
(21) Application number: 09161489.1
(22) Date of filing: 29.05.2009
(51) Int. Cl.: B01D 33/21

(54) **Filtration system and method to optimize filtration performance**

(71) Applicant: Novoflow GmbH, 86641 Rain am Lech (DE)
(72) Inventor: van Rijn, Cornelis Johannes Maria, 7255DB Hengelo (gld) (NL); Liebermann, Franz, 8706 Feldmeilen (CH)
(74) Representative: Cremer, Ulrike Theresia

(57) **Abstract**

The invention relates to a filtration system and method to optimize the filtration performance. The invention announces inter alia that the filter system consists of at least one filter medium, a filter housing and means to rotate the filter medium in the filter housing. The filter medium is subjected during the filtration process with small periods of a negative transmembrane pressure through an increase and decrease in rotational speed. The change in rotational speed is preferably a periodic one.

## Description

The invention relates to a filtration system and method to optimize the filtration performance.

The filtration of liquids typically includes the separation of unwanted particles from an unfiltered substance, e.g. a liquid, but also fluids, gases or particulate substances, the so called unfiltrate, and to provide a filtered purified substance, the so called permeate. During that filtration process particles that are filtered out from the unfiltered unfiltrate, e.g. liquid, tend to accumulate at one or more areas of the filtering unit at the retentate side, i.e. the side which is directed towards the unfiltrate, especially on the filter medium, and forming a cake layer.

Methods have been offered in order to either prevent the accumulation of particles on the filter medium, or to clean the filter medium from the accumulated particles. Common practice of cleaning the filter is a process known as backwashing the filter medium, in which a cleaning liquid, e.g. the permeate itself, is pushed through the filter medium from the permeate side to the retentate side. Normally a termination of the filtering process is required, and the backwashing takes place after the filtration process. Backwashing or short backwashstrokes (i.e. reversal of the flow direction through applying a negative transmembrane pressure) by pumping permeate back through the filter medium and taking place during the filtering process, i.e. without terminating the filtering process, is also known, but current solutions show difficulties of using them in an even, economical way, which would offer both a high level cleaning of the filter medium surface, while spending as little permeate and as little power as possible. Moreover, such filtering systems typically demand complicated means of incorporating the backwashing process. It is therefore desirable to find a reliable and simple means of cleaning the filter medium and inhibiting the formation of a cake layer during the filtration process.

It is known to rotate filter discs during filtration in order to diminish the thickness of the cake layer through the creation of high shear rate forces on the filter surface. Examples of such filtration units are so called single shaft disc filtration units. The filter medium, typically filter discs, are stacked on an axis which is rotated. However, also by these measures the formation of filter cakes cannot be sufficiently reduced. A consequence thereof is that rather soon after starting the filtration process filtration efficiency is reduced, depending on the substance to be filtered and the system used.

It is an object of the invention to improve filtration efficiency in filtering units having rotation filter mediums in an economic feasible and technical innovative way. The cake layer formation during the filtration process should be reduced in order to optimize the filtration performance.

According to the invention the filter system consists of at least one filter medium, a filter housing and means to rotate the filter medium in the filter housing. The filter medium is subjected during the filtration process with small periods of a negative transmembrane pressure through an increase and decrease in rotational speed. The change in rotational speed is preferably a periodic one.

In other words, at least one filter medium is rotated in a first rotational speed. During filtration process the first rotational speed is changed to a second rotational speed whereby a negative transmembrane pressure is effected on the filter medium. This change in rotational speed is performed during filtration. There is no need to stop the filtration process, as is necessary for classical backwashing step. Further, in contrast to known on-line backwashing process the energy charge for the new method freeing the filter medium surface from particles is neglectable; to the contrary, as the filter medium is much better penetrable as in prior art filtering method the overall energy consumption is even reduced.

What matters to effect the negative transmembrane pressure is the change between first and second rotation speed. This change is preferably of a short term, e.g. occurs only within one second. Thus, the change can also be said to be a rather fast one. Necessary is that the difference between first and second rotational speed should not be too small, as otherwise the effect will be too small to be measured. As will be clear to the expert, exact data depend on the filtration circumstances, i.e. the kind of unfiltrate, the filtration apparatus, the filter medium chosen, the first rotation speed etc. Consequently, the expert will be able to understand the invention by relative terms and will take the necessary measures in order to adapt the invention to his needs and conditions. By way of example, in experiments performed by the applicant changes of 1,5-20 times of the first rotational speed, more preferably 1,5-5 times, proved useful.

Surprisingly it has been found that by changing the rotational speed also a change in the transmembrane pressure over the filter medium is induced. The transmembrane pressure can even become negative and this means that a back wash stroke (i.e. a reversal of the flow direction through the filter) occurs that releases the filter medium surface of accumulated particles.

Good results have been obtained when the filter medium is subjected to an average rotation speed between 1 and 100 cycles per second and the duration of the, preferably periodic, increase and decrease in rotational speed is less than 50 % of the total filtration time. In other words, during the filtration process at least half of the time the filter mediums are rotated in the average rotation speed. During the rest of the time the rotational speed is changed in order to induce a backwashing effect. In first experiments performed applicant found that to effect a measurable improvement of flux rate 80-95% of the total filtration time the first rotation speed can be maintained. During the rest, 5-20 %, of the overall filtration time the second rotation speed is assumed in a periodically manner.

By the term average rotation speed is meant the rotation speed used in prior art to effect a first improvement of filter cake formation, as briefly explained in the introductory part. As the rotation of filter medium in an average rotation speed is well known in the prior art the average skilled artisan will know that the exact velocity depends on the type of filter medium used and its pore size, on the unfiltrate, on the filter apparatus size etc. Consequently the artisan is able to determine the average rotational speed without any inventive activity. This average rotational speed is termed first rotational speed.

According to the invention the rotational speed is during filter process changed from a first rotational speed to a second rotational speed, the first and second rotational speed being different from each other. This change can be a decrease in rotational speed as well as an increase. Important to effect a change in transmembrane pressure over the filter medium is the change in rotational speed. This change in rotational speed preferably is not done constantly but the filter medium is rotated in the first rotational speed and transiently the velocity is changed to the second rotational speed. Thereafter the first rotational speed is resumed. This change is effected preferably periodically.

According to experiments good negative transmembrane pressures can be induced wherein the filter medium is subjected to an average rotation speed and the difference in periodic increase and decrease in rotational speed is between 10 and 50 cycles per second. Because this way of operation will reduce cake layer formation on the filter medium, in some cases even free the filter medium from cake layer, it is advantageous to use filter mediums with a low flow resistance, such as microsieves, in order to obtain high fluxes at relatively low transmembrane pressure. Microsieves are filtration membranes having pores with a pore length smaller than ten times the pore diameter. However, the use of a microsieve as filter medium is only a preferred embodiment. Other filter mediums such as microporous ceramics, metals sieves, plastics etc. can also be used.

In the following the invention will be further explained by way of examples.

Example 1, filtration of skimmed milk: A microsieve filter with a pore size of 0,8 µm is placed in a rotatable disc in a distance of circa 5 cm of the rotation axis. The filtration system is filled with skimmed milk at 45 °C and a constant transmembrane pressure is set at 0,2 bar while rotating the disc with the filter medium at a constant speed of 12 cycles per second. The initial filtration flux was about 8.000 I/m²/hour but within a few seconds was reduced to less than 500 I/m²/hour. Such a reduction in the flux rate is typically for prior art filtration apparatus using this type of filter medium. When the rotating speed is increased from the average filtration speed of 12 cycles per second to a second rotation speed of 30 cycles per second during 1 second a negative transmembrane pressure is induced and some permeate is being pushed back through the microsieve, thus backwashing occurring. When the rotating speed is next decreased to the average rotation speed of 12 cycles per second the initial filtration flux is being restored. For constant operation mode the rotating parameters were set to 10 seconds at 12 cycles per second and after each 10 seconds the rotation is set to 30 cycles per second during one second. In this way an average milk filtration flux is measured of about 2.500 I/m²/hour (at 0,2 bar and 45° C) and was maintained for more than two hours.

Example 2, filtration of beer: A microsieve filter with a pore size of 0,8 µm is placed in a rotatable disc circa 5 cm from the rotation axis. The filtration system is filled with unfiltered beer at 15 °C and a constant transmembrane pressure is set at 0,22 bar while rotating the disc with the filter medium at a constant speed of 12 cycles per second. The initial filtration flux is about 10.000 I/m²/hour but within ten seconds reduces to less than 1.000 l/m²/hour. When the rotating speed is increased to 30 cycles per second during 1 second a negative transmembrane pressure is induced and some permeate is being pushed back through the microsieve. When the rotating speed is next decreased to 12 cycles per second the initial filtration flux is being restored. The rotating parameters were set to 10 seconds at 12 cycles per second and after each 10 seconds the rotation is set to 30 cycles per second during 1 second. In this way an average beer filtration flux is measured of about 3.000 I/m²/hour (at 0,22 bar and 15 °C) and was maintained for more than four hours.

## Claims

1. Filter system having at least one filter medium, a filter housing and means to rotate the filter medium in the filter housing, **characterized in that** the filter medium is subjected during the filtration process with small periods of a negative transmembrane pressure through increase and decrease in rotational speed.

2. Filter system according to claim 1, wherein the rotational speed is periodically increased and decreased.

3. Filter system according to claim 1 or 2, wherein the filter medium is subjected to an average rotation speed between 1 and 100 cycles per second and the duration of the periodic increase and decrease in rotational speed is less than 50 % of the total filtration time.

4. Filter system according to any of the preceding claims, wherein the filter medium is subjected to an average rotation speed between 1 and 100 cycles per second and the difference in periodic increase and decrease in rotational speed is between 10 and 50 cycles per second.

5. Filter system according to any of the preceding claims, wherein the filter medium is a membrane filter with a low flow resistance, in particular a microsieve.

6. Filtration method, wherein at least one filter medium is rotated in a first rotational speed during filtration process, **characterized in that** the rotational speed is temporarily changed to a second rotational speed whereby a negative transmembrane pressure is effected on the filter medium, thereby removing cake layer from the filter medium.

7. Filtration method according to claim 6, wherein the second rotational speed is about 1,5-20 times, preferably 1,5-5 times, the speed of the first rotational speed.

8. Filtration method according to any of claims 6-7, wherein the filter medium is rotated at the first rotational speed for at least 50 %, preferably 80-95 %, of total filtration time and wherein the second rotational speed is periodically assumed.

9. Filtration method according to any of claims 6-8, wherein the rotational speed is changed from first rotational speed to second rotational speed within a short time, compared with overall filtration duration, preferably within 0,5-2 seconds.

10. Method of filtering beer using a filter system according to any of claims 1-5.

11. Method of filtering milk using a filter system according to any of claims 1-5.
